# EUROPEAN PATENT SPECIFICATION

(11) **EP 1 936 224 B1**
(45) Date of publication and mention of the grant of the patent: **29.09.2021**
(21) Application number: 07254384.6
(22) Date of filing: 06.11.2007
(51) Int. Cl.: F16D 48/06, B60K 20/00, F16H 59/58, B60W 10/10, F16D 48/04

(54) **Straddle-type vehicle comprising a gear change control device.**
Straddle-Fahrzeug umfassend eine Gangschaltungssteuervorrichtung
véhicule de type enjambeur avec un dispositif de commande de changement de vitesse

(30) Priority: 28.11.2006 JP 2006320470
(43) Date of publication of application: 25.06.2008
(73) Proprietor: Yamaha Hatsudoki Kabushiki Kaisha, Iwata-shi, Shizuoka 438-8501 (JP)
(72) Inventor: Takeuchi, Yoshihiko, Iwata-shi Shizuoka-Ken 438-8501 (JP)
(74) Representative: Moreland, David

(56) References cited:
- EP-A1- 1 826 087
- EP-A1- 1 826 440
- EP-A1- 1 826 441
- None

## Description

### FIELD OF THE INVENTION

The present invention relates to a straddle-type vehicle.

### BACKGROUND TO THE INVENTION

Vehicles comprising a transmission including plural transmission gears and a clutch connected and disconnected in a change gear operation of the transmission are known. This kind of vehicle is usually provided with an operation member for operating the clutch by a driver (hereinafter referred to as a clutch operation member) and an operation member for operating the transmission (referred to as a gear change operation member). A clutch lever, a shift pedal and the like of a motorcycle are examples of a clutch operation member and a gear change operation member.

In many vehicles, the clutch operation member and the clutch as well as the gear change operation member and the transmission are respectively connected through a mechanical power transmitting mechanism such as a link, a rod and a wire or the like. Manipulating force of a driver is transmitted to the clutch and the transmission via the power transmitting mechanism.

In recent years, however, using an actuator such as an electric motor in connection and disconnection of a clutch or a change gear operation of a transmission has been attempted. For example, generation of assist force by means of an actuator in operating a clutch has been proposed for the purpose of reducing a load of a driver in operating the clutch.

JP-A-2000-205396 proposes an assembly comprising a sensor for detecting a clutch pedal depression quantity in an automobile and an actuator for changing engaging force of a clutch, wherein the actuator is controlled on the basis of a detection signal from the sensor of the clutch pedal. JP-A-2004-076897 discloses a motorcycle including a wire (a mechanical power transmitting mechanism) for connecting a clutch lever and a clutch and a power transmitting mechanism for connecting a shift pedal and a transmission, the motorcycle separately provided with an actuator for connecting and disconnecting a clutch and an actuator for changing transmission gears. In the motorcycle disclosed in JP-A-2004-076897, a clutch operation and a change gear operation can be optionally switched between manual and automatic operations.

In the prior art, however, an actuator can only generate assist force for reducing the manipulating force of a clutch and cannot change a characteristic of the clutch.

Further, the vehicle disclosed in JP-A-2000-205394 is an automobile and the clutch operation member is a stepping-type pedal. A driver cannot carry out a sensitive operation since the pedal is operated by means of a foot. In a straddle-type vehicle represented by a motorcycle, however, a driver tends to attach importance to manipulating performance more than the case of an automobile. A driver of a straddle-type vehicle sometimes prefers to carry out a subtle operation for quickly or largely changing movement of a vehicle.

In the vehicle disclosed in JP-A-2004-076897, a manual mode and an automatic mode can be switched therebetween. This seemingly enables secure freedom of drive and an easy operation to be simultaneously achieved when it is assumed that a driver attaching importance to manipulating performance (freedom of drive) selects the manual mode while a driver preferring to avoid trouble or difficulty in an operation (in other words, a driver preferring an easy operation) selects the automatic mode. Even in the case of the vehicle, however, it has been impossible to establish subtle setting so that fixed easiness of an operation would be kept while fixed freedom of drive would be obtained since the manual mode and the automatic mode are alternatively selected. That is to say, the operation necessarily has remained troublesome in the manual mode while the freedom of drive has been thoroughly lost in the automatic mode.

An example of an automatic clutch is described by EP1826440 (YAMAHA MOTOR CO LTD), which describes a clutch control device for an automatic clutch, that comprises means for detecting a drive side rotation speed of the clutch, means for detecting a position of the clutch, means for storing a target position of the clutch in association with the driving side rotational speed and clutch position change means configured to change the target position of the clutch according to human selection. A gear shift change is carried out by an electronic control unit (ECU) in response to operation of a gear shift up switch or a shift down switch. The ECU automatically controls the clutch actuator as part of the gear shift process. An EEPROM stores a regulation map, which regulates a target position where the clutch is to be positioned. Three running conditions can be selected (swift mode, normal mode and gentle mode). The selection of running mode is made by human manipulation, such as by a mechanic who operates a switch provided inside the vehicle body or the switch may be installed at a position on the handlebars so that the rider can select the running mode. In each running mode, a regulation map in accordance with the running condition can be selected and drive control of the clutch actuator is performed based on the selected regulation map.

EP1826087 (YAMAHA MOTOR CO LTD) describes an automatic gear shift device for a vehicle that comprises a friction clutch and a dog clutch gearbox. The automatic shift device comprises an electric actuator for engaging and disengaging the friction clutch and performing a gear change in the dog clutch gearbox. A control unit is configured to automatically control the actuator to shift a clutch position of the friction clutch to a disengaged side and to engage the friction clutch after a gear change. The control unit performs the clutch operation at the time of a shift change whilst the vehicle is running.

EP1826441 (YAMAHA MOTOR CO LTD) describes an automatic transmission controller which changes gear responsive to operation of a shift up or shift down switch. As part of the gear change process, an ECU automatically actuates a clutch to disengage it before performing a gear change operation before automatically re-engaging the clutch once the gear change operation has been completed.

Each of EP1826440, EP1826087 and EP1826441 constitute prior art according to Article 54(3) EPC.

In view of the above, an object of the invention is to enable an easy clutch operation and secure freedom of drive to be simultaneously achieved in a straddle-type vehicle including a manually operated clutch operation member.

### SUMMARY OF THE INVENTION

According to the present invention there is provided a straddle-type vehicle according to the appended claims.

Movement of a clutch has been uniformly fixed in the conventional case only by an operation of a clutch operation member since a clutch operation member is connected to the clutch via a mechanical power transmitting mechanism. In the change gear control device, however, a control device controls a drive device on the basis of an operation of the clutch operation member by a driver to connect and disconnect the clutch. In the case of the change gear control device, control by means of a control device thus exists between the clutch operation by a driver and movement of the clutch. This allows the easy clutch operation and secure freedom of drive to be simultaneously achieved.

In accordance with the invention, it is possible to simultaneously achieve an easy clutch operation and secure freedom of drive in a straddle-type vehicle including a clutch operation member operated manually.

### BRIEF DESCRIPTION OF THE DRAWINGS

These and other aspects of the present invention will now be described, by way of example only, with reference to the accompanying drawings, in which:
Fig. 1 is a side view of a motorcycle;
Fig. 2 is a perspective view of a left grip of a handle of the motorcycle of Fig. 1;
Fig. 3 is a view of a structure of an automatic gear change control device in accordance with an embodiment of the present invention;
Fig. 4 is a view of a structure of a main part of an engine unit of the motorcycle of Fig. 1;
Fig. 5 is a side view of a shift pedal and surrounding region of the motorcycle of Fig. 1;
Fig. 6 is a horizontal cross section of the shift pedal of Fig. 5;
Fig. 7 illustrates a clutch characteristic of an example embodiment of the present invention;
Fig. 8 illustrates another clutch characteristic of an example embodiment of the present invention; and
Fig. 9 illustrates another clutch characteristic of an example embodiment of the present invention.

### DETAILED DESCRIPTION OF THE DRAWINGS

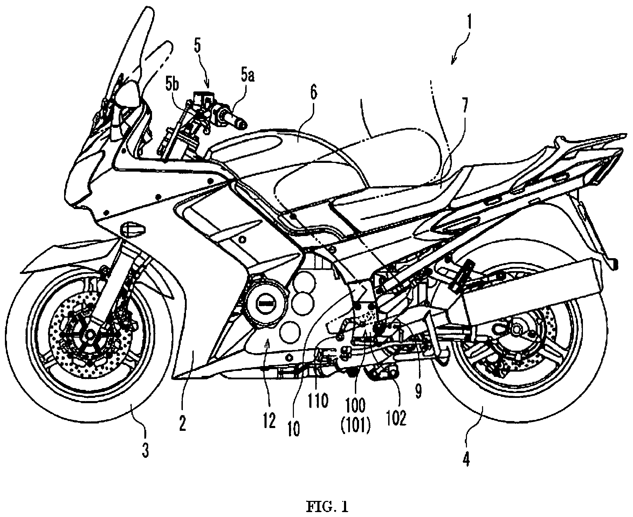

Fig. 1 is a side view showing a motorcycle 1 in accordance with an embodiment. It is assumed that front-rear and left-right directions in the following description mean front-rear and left-right directions in view of a driver straddling the motorcycle 1.

As shown in Fig. 1, the motorcycle 1 in accordance with the embodiment is a sport type motorcycle including a large cowling 2. The motorcycle 1 comprising a front wheel 3, a rear wheel 4, a handle 5, a fuel tank 6 and a seat 7. An engine unit 12 is provided under the fuel tank 6 and the seat 7 and is held by a body frame 10.

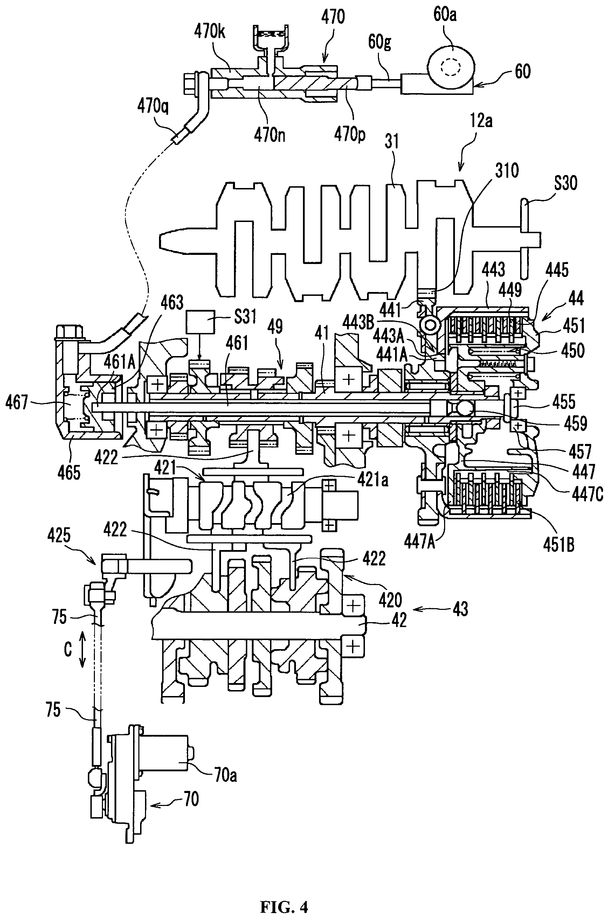

In the engine unit 12, there are provided a transmission 43 capable of freely changing gears in plural stages and a clutch 44 connected and disconnected in changing gears (refer to Fig. 4). The transmission 43 and the clutch 44 will be mentioned later.

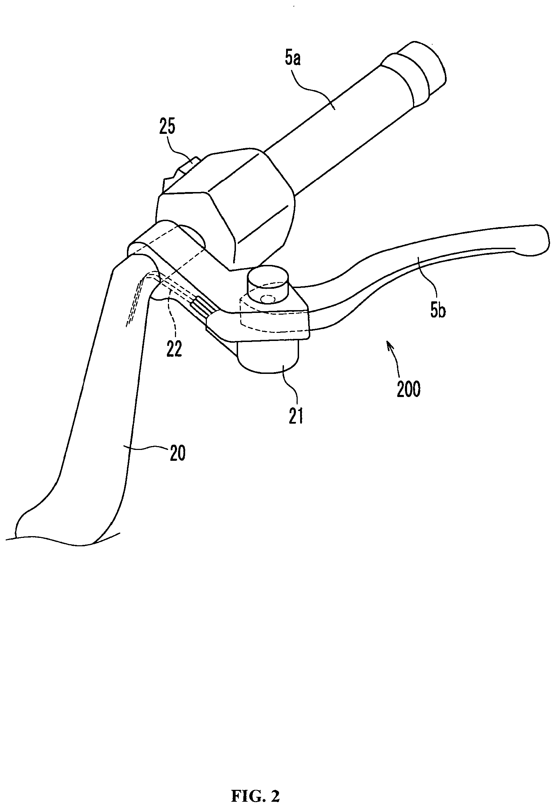

A clutch lever 5b is provided on a front side of a left grip 5a of the handle 5. As shown in Fig. 2, the left grip 5a is provided on the top end of a handle bar 20. The clutch lever 5b is urged to the front side (the right side in Fig. 2) by means of a spring (not shown). On a root side of the clutch lever 5b, there is provided an angle sensor 21. The angle sensor 21 measures a rotation angle of the clutch lever 5b to detect a position of the clutch lever 5b. The clutch lever 5b and the angle sensor 21 forma clutch operation unit 200 for operating the clutch 44.

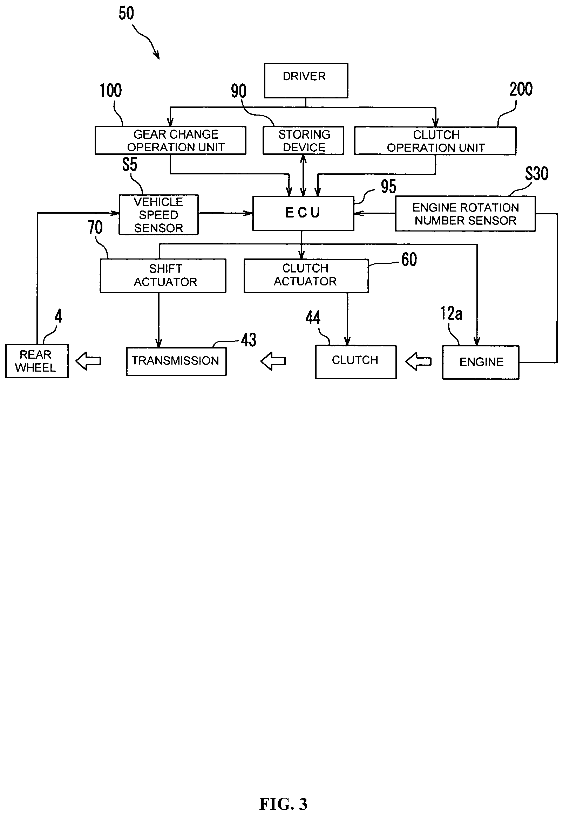

As shown in Fig. 3, the clutch operation unit 200 (including the angle sensor 21) is connected to an engine control device (hereinafter also referred to as an ECU) 95 through a signal line 22 (refer to Fig. 2). A detection signal from the angle sensor 21 is sent to the ECU 95 and the ECU 95 controls a clutch actuator 60 on the basis of this detection signal. For example, a clutch operation signal is sent from the clutch operation unit 200 to the ECU 95 when the angel sensor 21 detects that a driver pulls the clutch lever 5b by a predetermined quantity (in other words, that the clutch lever 5b rotates by a predetermined angle or more). The ECU 95 receives the signal and then drives the clutch actuator 60 to connect and disconnect the clutch 44.

A gear change operation unit 100 for operating the transmission 43 is provided on a bottom side of the left surface of the motorcycle 1 (in the vicinity of a left foot, which performs a gear change operation), as shown in Fig.1.

Fig. 3 is a diagram showing a structure of an automatic gear change control device 50 of the motorcycle 1. The automatic gear change control device 50 connects and disconnects the clutch 44 and changes the transmission gears of the transmission 43 by means of the clutch actuator 60 and a shift actuator 70 in accordance with an operation by a driver. In use, a signal is sent from the clutch operation unit 200 and the gear change operation unit 100 to the ECU 95 when a driver operates the clutch operation unit 200 and the gear change operation unit 100. On the basis of the signal or the signal and a drive state of the motorcycle 1 (a vehicle speed detected by means of a vehicle speed sensor S5, the engine rotation number detected by means of an engine rotation number sensor S30 and such, for example), the ECU 95 sends a control signal to the clutch actuator 60 and the shift actuator 70. As a result, the clutch actuator 60 connects and disconnects the clutch 44 while the shift actuator 70 initiates the transmission 43 to change gears. A detailed structure of the clutch 44 will now be described with reference to Fig. 4.

The clutch 44 in accordance with the embodiment is a so-called multiple disk friction clutch. The clutch 44 comprises a clutch housing 443, plural friction disks 445 formed into one body with the clutch housing 443, a clutch boss 447, plural clutch plates 449 fitted into the clutch boss 447 and a pressure plate 451. Torque is arranged to be transmitted from a crank shaft 31 to the clutch housing 443 through a gear 310 and a gear 441. The clutch 44 is provided with a spring 450 for urging the pressure plate 451 in a direction for connecting the clutch 44. That is, the spring 450 urges the pressure plate 451 leftward in Fig. 4.

As shown in Fig. 4, the clutch actuator 60 comprises an electric motor 60a. A hydraulic cylinder 470 is provided between the electric motor 60a and the clutch 44. In the embodiment, drive force of the electric motor 60a is amplified by means of the hydraulic cylinder 470 to be transmitted to the clutch 44. The clutch actuator 60 may drive the clutch 44 only by means of the electric motor 60a. A power transmitting mechanism between the clutch actuator 60 and the clutch 44 will now be described.

The pressure plate 451 of the clutch 44 is interlocked with an end side (the right in Fig. 4) of a push rod 455 through a bearing 457 and freely rotatable with respect to the push rod 455. In a cylindrical main shaft 41, there is provided a spherical ball 459 adjacent to the other end side (the left end) of the push rod 455. Further, on the left side of the ball 459, there is provided a push rod 461.

An end 461A of the push rod 461 is projected from the other end of the cylindrical main shaft 41. A piston 463 is provided in the projected end 461A of the push rod 461. The piston 463 is guided by means of a cylinder main body 465 so as to be freely slidable in an axial direction of the main shaft 41. A space 467 surrounded by the piston 463 and the cylinder main body 465 is supplied with oil.

When the clutch 44 is changed from a state of connection to a state of disconnection, the electric motor 60a of the clutch actuator 60 is driven and an output shaft 60g is moved leftward in Fig. 4. The movement of the output shaft 60g allows a piston 470p of the hydraulic cylinder 470 to be pushed leftward in Fig. 4. The oil in an oil chamber 470n of a cylinder main body 470k then passes through an oil hose 470q to be supplied to the space 467. This results in rightward movement in Fig. 4 of the piston 463.

The rightward movement of the piston 463 allows the pressure plate 451 to be pushed rightward in Fig. 4 through the push rod 461, the ball 459, the push rod 455 and the bearing 457. When the force pushing the pressure plate 451 rightward is larger than the force of the spring 450 for urging the pressure plate 451 leftward in Fig. 4, the pressure plate 451 moves rightward in Fig. 4. A pressure part 451B of the pressure plate 451 then moves away from a friction disk 445, so that the clutch is configured into a disconnected state.

A case that the clutch 44 is changed from a disconnected state to a connected state will now be described. In the case that the clutch 44 is disconnected, the piston 463 pushes the pressure plate 451 rightward in Fig. 4 through the push rod 461, the ball 459, the push rod 455 and the bearing 457 to keep a state that the pressure plate 451 moves away from the friction disk 445. Even under such a condition, the pressure plate 451 is still urged leftward in Fig. 4 by means of the spring 450. Accordingly, the piston 463 is urged leftward in Fig. 4 through the bearing 457, the push rod 455, the ball 459 and the push rod 461.

Further, the piston 470p of the hydraulic cylinder 470 is also urged rightward in Fig. 4 through the oil flowing in the oil hose 470q since the piston 463 is urged.

When the electric motor 60a is driven from the state of disconnection of the clutch 44 and the output shaft 60g of the clutch actuator 60 is gradually moved rightward in Fig. 4, the piston 470p also moves rightward in Fig. 4 in accordance with the above. The movement of the piston 470p allows the oil to flow into the oil chamber 470n from the space 467 surrounded by the cylinder main body 465 and the piston 463 via the oil hose 470q.

The movement of the oil gradually moves the piston 463 urged by the pressure plate 451 and the spring 450 leftward in Fig. 4. In accordance with the above, the pressure plate 451 also moves leftward in Fig. 4 gradually. After the clutch 44 starts connection (starts transmitting power) and the pressure plate 451 further moves leftward in Fig. 4, urging force of the spring 450 makes friction force generated between the friction disk 445 and the clutch plate 449 large. As a result, slippage between the friction disk 445 and the clutch plate 449 is almost lost to complete connection of the clutch.

The ECU 95 (refer to Fig. 3) executes the above-mentioned operation of the clutch actuator 60 in accordance with an operation of the clutch lever 5b by a driver.

A structure of the transmission 43 will now be described. The transmission 43 is a so-called dog clutch type transmission and comprises plural transmission gears 49. The transmission gears 49 are mounted to the main shaft 41. The respective transmission gears 49 on the main shaft 41 engage with transmission gears 420 mounted to the drive shaft 42 correspondingly to the transmission gears 49 (they are, however, separately drawn in Fig. 4 for clarity). Any one or both of the transmission gears 49 and the transmission gears 420 other than a selected pair of transmission gears is mounted so as to be idling (racing) with respect to the main shaft 41 or the drive shaft 42. Accordingly, drive force from the main shaft 41 to the drive shaft 42 is transmitted only through the selected pair of transmission gears.

A shift operation for selecting the transmission gear 49 and the transmission gear 420 to change a speed change ratio is carried out by means of a shift cam 421, which is a shift input shaft. The shift cam 421 has plural cam grooves 421a. Shift forks 422 are mounted to the respective cam grooves 421a. The respective shift forks 422 are interlocked with the predetermined transmission gears 49 and the predetermined transmission gears 420 of the main shaft 41and the drive shaft 42, respectively. Rotation of the shift cam 421 allows the cam groove 421a to guide the shift fork 422 so that the shift fork 422 would move in the respective axial directions. Only a pair of the transmission gear 49 and the transmission gear 420 located at positions corresponding to a rotation angle of the shift cam 421 then becomes fixed with respect to the main shaft 41 and the drive shaft 42 by a spline, respectively. This allows positions of the transmission gears to be fixed and the speed change ratio to be fixed. Transmission of rotation force is then performed between the main shaft 41 and the drive shaft 42 through the transmission gears 49 and the transmission gears 420. A reference mark S31 in Fig. 4 denotes a drive shaft rotation sensor. A reference mark 12a denotes an engine.

The shift actuator 70 comprises an electric motor 70a. Between the shift actuator 70 and the transmission 43 there is provided a shift link mechanism 425. The shift actuator 70 reciprocates a shift rod 75 in a direction shown by an arrow C and rotates the shift cam 421 by a predetermined angle through the shift link mechanism 425. This moves the shift fork 422 by a predetermined quantity in the axial direction in accordance with the cam groove 421a. A pair of the transmission gear 49 and the transmission gear 420 is then made fixed to the main shaft 41 and the drive shaft 42 respectively to transmit rotation drive force at respective reduction speed ratios.

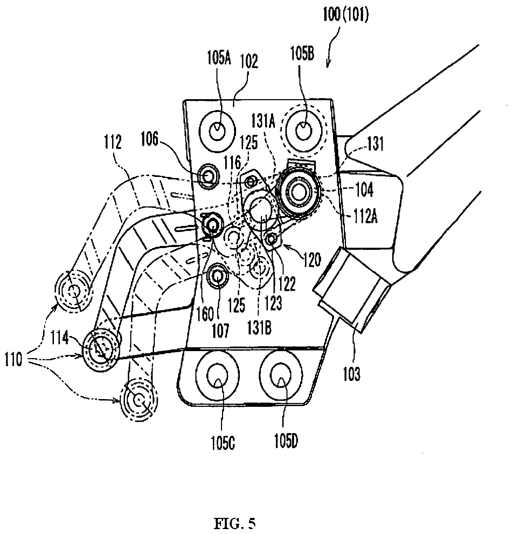

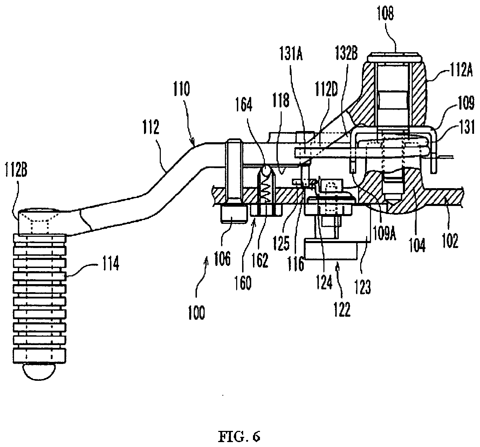

The gear change operation unit 100 will now be described with reference to Figs. 5 and 6.

The gear change operation unit 100 includes a base plate 102, which is freely detachably mounted to the body frame 10 (or the engine unit 12). The base plate 102 is a substantially square plate and mounted by means of screws (omitted from the drawing) through mounting holes 105A, 105B, 105C and 105D, which are provided in four places in total, as shown in Fig. 5.

An operation part 101 to be operated by a foot is mounted to the base plate 102. On the base plate 102 there is formed a footrest mount part 103 for rotatably mounting a footrest 9 (refer to Fig. 1) on which a left foot of a driver may be positioned.

The operation part 101 has a shift pedal 110. The shift pedal 110 includes an arm part 112 whose one end 112A is rotatably mounted to an inner surface side of the base plate 102 (a side faced to the vehicle body; the same applies in the following description) and a pedal part 114 mounted to the other end 112B (refer to Fig. 6) of the arm part 112 to as to be directly operated by a foot. That is, the end 112A of the arm part 112 of the shift pedal 110 is mounted to a boss part 104 of the base plate 102 through a screw member 108 in the vicinity of the footrest 9 (in other words, in the vicinity of the footrest mount part 103), as shown in Figs. 5 and 6. The end 112A of the arm part 112 is mounted to the boss part 104 of the base plate 102 so as to be freely rotatable (that is, so as to be able to swing in two of up and down directions) with the screw member 108 used as a rotation shaft. The top end 112B of the arm part 112 of the shift pedal 110 is provided with a pedal part (a pressured part) 114 for receiving a load of a foot.

On the outer surface side of the base plate 102 there is provided a detection part 120. The detection part 120 comprises a potentiometric sensor (a rotation sensor or an angle sensor, which is formed from a potentiometer having a variable resistance element) 122. The potentiometric sensor 122 detects that the shift pedal (a movable part) 110 moves by a predetermined quantity or more in accordance with an operation by a foot. A sensor main body 123 of the potentiometric sensor 122 is fixed to the base plate 102. A rotation plate 124 is mounted to the sensor main body 123 so as to be freely rotatable. Rotation of the rotation plate 124 allows movement (rotation) of the shift pedal 110 toward a predetermined direction to be detected. A signal of the detection is sent to the ECU 95.

An engaging notch 125 is formed in the rotation plate 124 as shown in Figs. 5 and 6. An engaging pin 116 projectingly provided to the shift pedal 110 is inserted into the engaging notch 125. In accordance with such a structure, the rotation plate 124 is rotated through the engaging pin 116 when the shift pedal 110 rotates.

On the inner surface side of the base plate 102 there is provided a V-shaped spring (a spring, which is formed from a metal bar, whose center part is wound several times and which has an acute angle between both straight end parts, as shown in the drawings) 131 used as "a return mechanism" for returning the shift pedal 110 to a fixed neutral position. The V-shaped spring 131 includes a pair of support rods (the straight end parts) 131A and 131B for generating spring elasticity. Between the pair of support rods 131A and 131B there is provided a part of the arm part 112 (referred to as "a pressure part 112D", hereinafter) of the shift pedal 110 and an engaging piece 109A of a retainer 109. As shown in Fig. 6, the retainer 109 is fixed to the boss part 104 of the base plate 102.

The pressure part 112D is formed in a folded part of the arm part 112 of the shift pedal 110, as shown in Fig. 6. The width of the pressure part 112D is same as that of the other part.

To the base plate 102 there are mounted two stopper pins 106 and 107. That is to say, the rising stopper pin 106 is mounted at a position capable of contacting to an upper edge of the shift pedal 110 to stop rotation of the shift pedal 110 when the shift pedal 110 moves (rotates) upward by a predetermined quantity as shown by a double dotted line in Fig. 5. On the other hand, the falling stopper pin 107 is mounted at a position capable of contacting to a lower edge of the shift pedal 110 to stop rotation of the shift pedal 110 when the shift pedal 110 moves (rotates) downward by a predetermined quantity as shown by a single dotted line in Fig. 5.

Further, the base plate 102 is provided with a plunger 160 forming a manipulating force variable mechanism. As shown in Fig. 6, a coil spring 162 is inserted in a cylindrical main body of the plunger 160. At the top end of the plunger 160, mounted is a movable ball 164 connected to the spring 162. The spring 162 holds the movable ball 164. When the movable ball 164 is pressured with predetermined or more force in the axial direction of the cylindrical main body, the spring 162 is drawn back due to the pressure. As a result, the movable ball 164 is drawn back to the inner side of the cylindrical main body. On the other hand, when the pressure is removed, the spring 162 extends due to the elasticity, so that the movable ball 164 returns to an original position of the top end of the plunger 160 (refer to Fig. 6).

On the other hand, in the shift pedal 110, formed are two insertion grooves 118 forming the manipulating force variable mechanism so as to correspond to the plunger 160. That is, the insertion grooves 118 are formed in places where insertion of the movable ball 164, which is a top end of the plunger 160, into the insertion groove 118 can be achieved when the shift pedal 110 rotates (swings) in a vertical direction in accordance with an operation by a foot from the fixed neutral position (a position shown by a solid line) in Fig. 5 to move to positions shown by a single and double dotted lines (respectively referred to as "a shifting down body sense signal generating position" and "a shifting up body sense signal generating position", hereinafter), respectively.

That is to say, the movable ball 164 is in contact with a wall surface of the shift pedal 110 (the arm part 112) by pressure at a fixed neutral position and its peripheral positions, so that the pressure causes predetermined torque on a foot operating the shift pedal (namely, a left foot carrying out a gear change operation). On the other hand, when the shift pedal 110 moves to the shifting down body sense signal generation position or the shifting up body sense signal generation position, the movable ball 164 is inserted into the insertion groove 118. The torque necessary for the moving operation of the shift pedal 110 changes in an instant in the insertion. Moreover, the torque also changes in an instant when the movable ball 164 is once fixed in the insertion groove 118. A driver recognizes such a change of torque as a sense of a click through feeling in his or her foot.

When the potentiometric sensor 122 detects that a driver operates the shift pedal 110 by means of his or her foot to rotate the rotation plate 124 in the shifting-up direction by a predetermined quantity, a shifting up command signal is sent from the gear change operation unit 100 to the ECU 95 (refer to Fig. 3). On the other hand, a shift down command signal is sent from the gear change operation unit 100 to the ECU 95 when the potentiometric sensor 122 detects that the rotation plate 124 rotates in the shifting-down direction by a predetermined quantity. The ECU 95 drives the shift actuator 70 so that the transmission 43 would carry out a shifting-up operation in the case that the ECU 95 receives the shifting up command signal. The ECU 95 drives the shift actuator 70 so that the transmission 43 would carry out a shifting-down operation in the case that the ECU 95 receives the shifting down command signal. According to the motorcycle 1 in accordance with the embodiment, a characteristic of the clutch 44 (hereinafter referred to a clutch characteristic) for an operation of the clutch lever 5b can be changed freely. The clutch characteristics include (1) lever manipulating force (including reaction force), (2) a clutch stroke, (3) transmission torque and such for a position of the clutch lever. Providing an electric brake, which is built in the angle sensor 21 (refer to Fig. 2) of the clutch lever 5b, to generate operation resistance, for example, allows the reaction force of the lever manipulating force to be created so that the reaction force would have an optional characteristic. Examples of modification of the clutch characteristic will now be described.

### Example of modification of a clutch characteristic 1

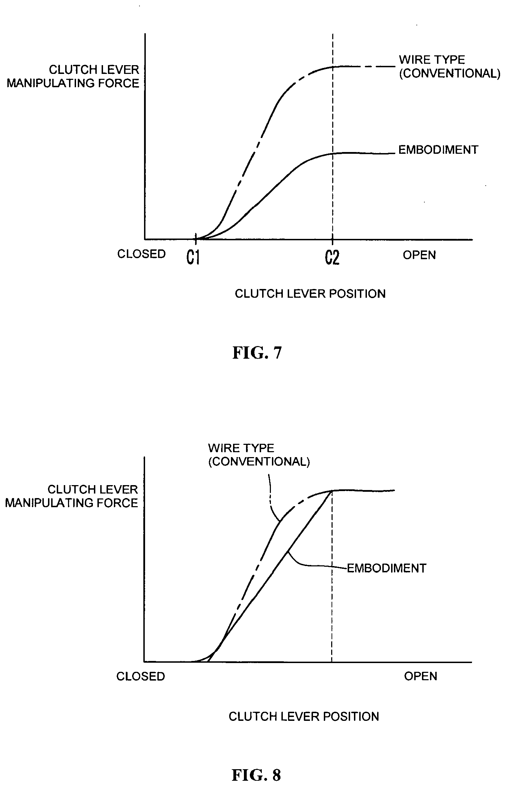

For a driver preferring reduction of a load (force necessary for an operation = manipulating force) without_changing feeling of manipulation of the clutch lever 5b, for example, the manipulating force of the clutch lever 5b may be uniformly reduced by a predetermined percentage (50 %, for example) compared with a conventional wire type clutch system (a system in which a clutch lever and a clutch are connected through a wire), as shown in Fig. 7. This allows only the manipulating force of the clutch lever 5b to be reduced without changing a clutch lever position CI from which disconnection of the clutch 44 starts and a clutch lever position C2 from which disconnection of the clutch 44 ends.

That is to say, only the manipulating force of the clutch lever 5b can be reduced without changing regular movement of the clutch 44 for an operation of the clutch lever 5b. Accordingly, an operation with a load less than before can be performed with feeling same as before. This results in achievement of both of an easy clutch operation and secure freedom of drive.

### Example of modification of a clutch characteristic 2

Further, in accordance with the motorcycle 1, achieved can be manipulation feeling, which cannot be obtained before. For example, as shown in Fig. 8, it may be possible that a load at a last stage of a grip of the clutch lever 5b is set same as before while a load at a first stage of the grip is set smaller than before. Moreover, the manipulating force of the clutch lever 5b may be set so as to be proportional to the rotation angle thereof within a predetermined range of position (a range other than so-called play, for example) of the clutch lever 5b, as shown in Fig. 8.

### Example of modification of a clutch characteristic 3

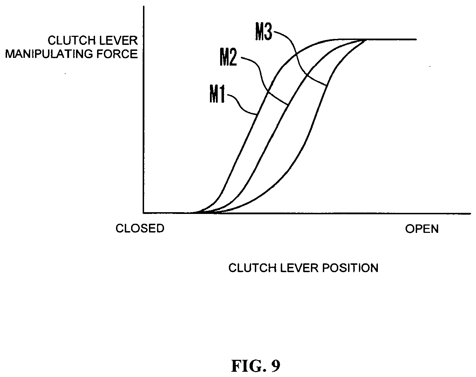

It may be possible that plural clutch characteristics (clutch characteristics MI, M2 and M3 shown in Fig. 9 or the like, for example) are stored in a storage device 90 (refer to Fig. 3) of the automatic gear change control device 50 in advance to select any one of the clutch characteristics manually by a driver. In this case, a switch 25 (refer to Fig. 2) for selection or such is preferably provided to the handle 5 or the like as an input device. Further, it also may be possible to prepare "a linear mode" in which a clutch characteristic in the conventional wire type clutch system is achieved and "a friendly mode" in which the clutch lever 5b is regarded simply as an ON/OFF switch and a grip of the clutch lever 5b automatically causes disconnection of the clutch 44 at a predetermined speed. In this case, a driver attaching importance to freedom of drive rather than easiness of the clutch operation selects "the linear mode" while a driver attaching importance to easiness of the clutch operation rather than freedom of drive selects "the friendly mode". Accordingly, both drivers can achieve a clutch operation suitable for the driver per se.

In addition, it may be possible to provide a drive state detection device for detecting a state of drive so that the ECU 95 would change the clutch characteristic on the basis of a result of the detection by means of the drive state detection device. In this case, considered as a parameter indicating the state of drive can be an accelerator grip position (or a throttle position), a vehicle speed, a gear stage, the number of engine rotation and such, for example. As the drive state detection device for detecting a state of the above, considered can be a sensor (or a throttle position sensor) for detecting an accelerator grip position (not shown), a vehicle speed sensor S5, a gear position sensor (not shown), an engine rotation number sensor S30 and such, for example.

In the case that a driver suddenly returns the clutch lever 5b when the number of rotation of the engine is high, for example, switch from the disconnection state to the connection state of the clutch 44 may be carried out purposely slowly so as to reduce a shock in changing gears. Furthermore, in the case that a driver suddenly returns the clutch lever 5b when the number of rotation of the engine is low, switch from the disconnection state to the connection state of the clutch 44 may be carried out purposely slowly for the purpose of avoiding stalling of the engine. Moreover, switch from the disconnection state to the connection state of the clutch 44 may be carried out purposely slowly in order to prevent the number of rotation of the engine from suddenly rising with the clutch 44 being in a state of disconnection in the case that a driver suddenly pulls the clutch lever 5b while the accelerator is open.

It may be also possible that plural clutch characteristics are stored in the storage device 90 (refer to Fig. 3) of the automatic gear change control device 50 in advance to let the ECU 95 control the clutch actuator 60 on the basis of a result of detection by means of the drive state detection device so that the clutch 44 would operate with any clutch characteristic for an operation of the clutch lever 5b.

In accordance with the invention, also achieved can be not only a change of a relation between a lever angle of the clutch lever 5b and a load but also an effect of a nonlinear actual stroke. For example, the characteristic may be increased in resolving power in the vicinity of an engaging point and decreased in resolving power other than the above. The clutch characteristic, which can be more easily handled, can be thus achieved. The engaging point means a clutch stroke position from which the clutch 44 starts transmitting the transmission torque. The vicinity of the engaging point is a range where the transmission torque for a clutch stroke suddenly changes, and thereby, a range where an operation by means of a manual clutch lever is difficult. Setting a clutch stroke for a lever stroke at 1:0.6, for example, in the vicinity of the engaging point allows subtle stroke adjustment to be easily achieved. This leads to improvement in easiness of handling.

As described above, according to the motorcycle 1 of the embodiment, there are provided a clutch operation member (the clutch lever 5b), which is manually operated, and a drive device for driving the clutch 44 (the clutch actuator 60) to control the drive device on the basis of an operation of the clutch operation member by a driver. Accordingly, changing contents of control allows both of easiness of a clutch operation and secure freedom of drive to be achieved.

Further, in accordance with the motorcycle 1, there is provided an operation member position sensor (the angle sensor 21) for detecting a position of a clutch operation member (the clutch lever 5b) to control drive device in accordance with the position of the clutch operation member.

The clutch operation member is subtly operated since it is manually operated, so that the position of the clutch operation member is subtly changed. Accordingly, controlling the drive device in accordance with the position of the clutch operation member allows subtle control in accordance with a subtle operation by a driver to be achieved, so that manipulating performance can be improved.

According to the motorcycle 1 of the embodiment, achieved can be not only reduction of manipulating force in a clutch operation but also a free change of a clutch characteristic. Accordingly, a clutch characteristic corresponding to a driver's taste, a drive state of the motorcycle 1 or the like allows feeling in riding to be improved.

Moreover, according to the motorcycle 1 of the embodiment, provided is a drive state detection device and a clutch characteristic can be changed on the basis of a result of detection by means of the drive state detection device. This allows the clutch operation to be more easily performed. Further, the feeling in riding also can be improved.

In addition, storing plural clutch characteristics in the storing device 90 in advance to select one or more clutch characteristics by means of an input device (the switch 25) allows both of achievement of easiness of a clutch operation and secure freedom of drive to be achieved with a comparatively simple structure.

On the other hand, storing plural clutch characteristics in the storing device 90 in advance so that the ECU 95 would automatically select one or more clutch characteristics in accordance with a drive state allows the easiness of a clutch operation to be more improved.

Furthermore, in the motorcycle 1 of the embodiment, the drive device (the shift actuator 70) is controlled on the basis of a driver' s operation of an operation member (a shift pedal) to execute a predetermined operation (a gear change) not only for a clutch operation but also for a shift operation. Accordingly, various kinds of control can be achieved for both of the clutch operation and the shift operation. Combination of the above allows both of an easy operation and secure freedom of drive in a whole operation of a shift change to be achieved to a high degree.

The method of controlling the drive device on the basis of an operation of the clutch operation member is not limited to the method of controlling the drive device in accordance with a position of the clutch operation member. It may be a method of controlling the drive device in accordance with a load of the clutch operation member, for example.

In the embodiment, the swing type clutch lever 5b corresponds to the clutch operation member in accordance with the invention. The clutch operation member, however, is not limited to the swing type clutch lever 5b but may be another operation member. The clutch operation member may be a slide type lever, for example. Moreover, the clutch operation member may be a button type operation member. In the case of the button type operation member, a position of the clutch operation member is defined on the basis of a push quantity (a stroke quantity) of a button.

Further, in the embodiment, the shift pedal 110 corresponds to the transmission operation member in accordance with the invention. The transmission operation member, however, is not limited to the swing type operation member such as the shift pedal 110. It may be a button type operation member or the like, the button type operation member formed from two buttons provided on the toe side and the heel side.

In the embodiment, the angle sensor 21 for detecting a rotation angle of the clutch lever 5b corresponds to the operation member position sensor for detecting a position of the clutch operation member. The operation member position sensor, however, is not limited to the angle sensor 21 and may be a sensor or the like for detecting a distance of movement of the top end of the clutch lever 5b. Moreover, it may be also possible to provide the clutch lever 5b with a clutch wire to detect a position of the clutch lever 5b on the basis of a moving quantity of the clutch wire.

As described above, the invention is useful for a change gear control device provided in a straddle-type vehicle and a straddle-type vehicle provided with the same.

### Description of the Reference Numerals and Signs

- 1:: motorcycle (straddle-type vehicle)
- 5b:: clutch lever (clutch operation member)
- 43:: transmission
- 44:: clutch
- 50:: gear change control device
- 60:: clutch actuator (drive device)
- 70:: shift actuator (transmission drive device)
- 90:: storing device
- 95:: ECU (control device)
- 110:: shift pedal (transmission operation member)

## Claims

1. A straddle-type vehicle (1) comprising a gear change control device (50), the gear change control device (50) comprising:
a transmission (43) adapted to change gears in a plurality of stages;
a clutch (44) adapted to be connected and disconnected in order for the transmission (43) to change gears;
a drive device that drives the clutch, the drive device comprising a clutch actuator (60);
a manually operated clutch operation member (5b);
a control device comprising an ECU (95) for controlling the clutch actuator (60) on the basis of an operation of the clutch operation member (5b), wherein the control device controls the clutch actuator (60) upon manual operation of the clutch operation member (5b) so that the clutch actuator (60) connects and disconnects the clutch (44);
a transmission drive device comprising a shift actuator (70) that drives the transmission (43); and
a transmission operation member (110) for operating the transmission (43) to change gear, wherein
the control device (95) controls the transmission drive device upon operation of the transmission operation member (110) so that the transmission drive device (70) changes gears in the transmission (43),
the clutch operation member (5b) comprises a clutch lever provided on a front side of a left grip (5a) of the handlebar (20), and
the transmission operation member (110) comprises a shift pedal.

2. A straddle-type vehicle (1) comprising a gear change control device (50) according to Claim 1, comprising:
a clutch operation member position sensor (21) for detecting a position of the clutch operation member (5b), wherein the control device (95) controls the drive device (60) in accordance with a position of the clutch operation member (5b) detected by means of the operation member position sensor (21).

3. A straddle-type vehicle (1) comprising a gear change control device (50) according to Claim 1 or 2, adapted to freely change a clutch characteristic, the clutch characteristic being a characteristic of the clutch (44) for an operation of the clutch operation member (5b).

4. A straddle-type vehicle (1) comprising a gear change control device (50) according to Claim 1, 2 or 3, comprising:
a drive state detecting device for detecting a drive state of an associated vehicle (1).

5. A straddle-type vehicle (1) comprising a gear change control device (50) according to Claim 3 and 4, wherein the control device (95) changes the clutch characteristic on the basis of a result of the detection by means of the drive state detecting device.

6. A straddle-type vehicle (1) comprising a gear change control device (50) according to any preceding Claim, comprising a storing device (90) for storing a plurality of predetermined plural clutch characteristics.

7. A straddle-type vehicle (1) comprising a gear change control device (50) according to Claim 6, comprising an input device (25) for an input in selecting at least one of the plurality of clutch characteristics.

8. A straddle-type vehicle (1) comprising a gear change control device (50) according to Claim 7, wherein the control device (95) controls the drive device (60) so that the clutch characteristic selected by means of the input device (25) is achieved.

9. A straddle-type vehicle (1) comprising a gear change control device (50) according to Claim 6 when dependent on Claim 4 or 5, wherein the control device (95) selects at least one of the plurality of clutch characteristics on the basis of a result of detection by the drive state detecting device to control the drive device (60) so that the selected clutch characteristic is achieved.

10. A straddle-type vehicle (1) comprising a gear change control device (50) according to Claim 1, wherein the gear change control device (50) is provided in a straddle-type vehicle (1), and wherein
the transmission (43) is capable of freely changing gears in plural stages.

## Patentansprüche

1. Reitsitzfahrzeug (1), das eine Gangwechsel-Steuervorrichtung (50) umfasst, wobei die Gangwechsel-Steuervorrichtung (50) Folgendes umfasst:
ein Getriebe (43), das angepasst ist, um in einer Vielzahl von Stufen Gänge zu wechseln,
eine Kupplung (44), die angepasst ist, um eingerückt und ausgerückt zu werden, damit das Getriebe (43) Gänge wechselt,
eine Antriebsvorrichtung, welche die Kupplung antreibt, wobei die Antriebsvorrichtung einen Kupplungsstellantrieb (60) umfasst,
ein manuell betätigtes Kupplungsbetätigungselement (5b),
eine Steuervorrichtung, die eine elektronische Steuereinheit (95) zum Steuern des Kupplungsstellantriebs (60) auf der Grundlage einer Betätigung des Kupplungsbetätigungselements (5b) steuert, wobei die Steuervorrichtung den Kupplungsstellantrieb (60) auf eine manuelle Betätigung des Kupplungsbetätigungselements (5b) hin so steuert, dass der Kupplungsstellantrieb (60) die Kupplung (44) einrückt und ausrückt,
eine Getriebe-Antriebsvorrichtung, die einen Schaltstellantrieb (70) umfasst, der das Getriebe (43) antreibt, und
ein Getriebe-Betätigungselement (110) zum Betätigen des Getriebes (43), um einen Gang zu wechseln, wobei
die Steuervorrichtung (95) die Getriebe-Antriebsvorrichtung auf eine Betätigung des Getriebe-Betätigungselements (110) hin so steuert, dass die Getriebe-Antriebsvorrichtung (70) in dem Getriebe (43) Gänge wechselt,
das Kupplungsbetätigungselement (5b) einen Kupplungshebel umfasst, der auf einer Vorderseite eines linken Griffs (5a) des Lenkers (20) bereitgestellt wird, und
das Getriebe-Betätigungselement (110) ein Schaltpedal umfasst.

2. Reitsitzfahrzeug (1), das eine Gangwechsel-Steuervorrichtung (50) umfasst, nach Anspruch 1, das Folgendes umfasst:
einen Kupplungsbetätigungselement-Positionssensor (21) zum Erfassen einer Position des Kupplungsbetätigungselements (5b), wobei die Steuervorrichtung (95) die Antriebsvorrichtung (60) entsprechend einer Position des Kupplungsbetätigungselements (5b) steuert, die durch den Kupplungsbetätigungselement-Positionssensor (21) erfasst wird.

3. Reitsitzfahrzeug (1), das eine Gangwechsel-Steuervorrichtung (50) umfasst, nach Anspruch 1 oder 2, das angepasst ist, um frei eine Kupplungskennline zu ändern, wobei die Kupplungskennlinie eine Kennlinie der Kupplung (44) für eine Betätigung des Kupplungsbetätigungselements (5b) ist.

4. Reitsitzfahrzeug (1), das eine Gangwechsel-Steuervorrichtung (50) umfasst, nach Anspruch 1, 2 oder 3, das Folgendes umfasst:
eine Fahrzustandserfassungsvorrichtung zum Erfassen eines Fahrzustandes eines zugehörigen Fahrzeugs (1).

5. Reitsitzfahrzeug (1), das eine Gangwechsel-Steuervorrichtung (50) umfasst, nach Anspruch 3 und 4, wobei die Steuervorrichtung (95) die Kupplungskennlinie auf der Grundlage eines Ergebnisses der Erfassung mit Hilfe der Fahrzustandserfassungsvorrichtung ändert.

6. Reitsitzfahrzeug (1), das eine Gangwechsel-Steuervorrichtung (50) umfasst, nach einem der vorhergehenden Ansprüche, das eine Speichervorrichtung (90) zum Speichern einer Vielzahl von vorbestimmten mehreren Kupplungskennlinien umfasst.

7. Reitsitzfahrzeug (1), das eine Gangwechsel-Steuervorrichtung (50) umfasst, nach Anspruch 6, das eine Eingabevorrichtung (25) für eine Eingabe beim Auswählen mindestens einer der Vielzahl von Kupplungskennlinien umfasst.

8. Reitsitzfahrzeug (1), das eine Gangwechsel-Steuervorrichtung (50) umfasst, nach Anspruch 7, wobei die Steuervorrichtung (95) die Antriebsvorrichtung (60) so steuert, dass die mit Hilfe der Eingabevorrichtung (25) ausgewählte Kupplungskennlinie erreicht wird.

9. Reitsitzfahrzeug (1), das eine Gangwechsel-Steuervorrichtung (50) umfasst, nach Anspruch 6, wenn abhängig von Anspruch 4 oder 5, wobei
die Steuervorrichtung (95) mindestens eine der Vielzahl von Kupplungskennlinien auf der Grundlage eines Ergebnisses der Erfassung durch die Fahrzustandserfassungsvorrichtung auswählt, um die Antriebsvorrichtung (60) so zu steuern, dass die ausgewählte Kupplungskennlinie erreicht wird.

10. Reitsitzfahrzeug (1), das eine Gangwechsel-Steuervorrichtung (50) umfasst, nach Anspruch 1, wobei die Gangwechsel-Steuervorrichtung (50) in einem Reitsitzfahrzeug (1) bereitgestellt wird und wobei das Getriebe (43) dazu in der Lage ist, frei in mehreren Stufen Gänge zu wechseln.

## Revendications

1. Véhicule à enfourcher (1) comprenant un dispositif de commande de changement de vitesse (50), le dispositif de commande de changement de vitesse (50) comprenant :
une transmission (43) adaptée pour changer les vitesses dans une pluralité de rapports ;
un embrayage (44) adapté pour être embrayé et débrayé afin de permettre à la transmission (43) de changer les vitesses ;
un dispositif d'entraînement qui entraîne l'embrayage, le dispositif d'entraînement comprenant un actionneur d'embrayage (60) ;
un élément d'actionnement d'embrayage (5b) actionné manuellement ;
un dispositif de commande comprenant une unité de commande électronique (95) pour commander l'actionneur d'embrayage (60) sur la base d'un actionnement de l'élément d'actionnement d'embrayage (5b), dans lequel le dispositif de commande commande l'actionneur d'embrayage (60) lors de l'actionnement manuel de l'élément d'actionnement d'embrayage (5b) de manière que l'actionneur d'embrayage (60) embraye et débraye l'embrayage (44) ;
un dispositif d'entraînement de transmission comprenant un actionneur de changement de vitesse (70) qui entraîne la transmission (43) ; et
un élément d'opération de transmission (110) pour actionner la transmission (43) afin de changer la vitesse, dans lequel
le dispositif de commande (95) commande le dispositif d'entraînement de transmission lors de l'actionnement de l'élément d'actionnement de transmission (110) de manière que le dispositif d'entraînement de transmission (70) change les vitesses dans la transmission (43),
l'élément d'actionnement d'embrayage (5b) comprend un levier d'embrayage disposé sur un côté avant d'une poignée gauche (5a) du guidon (20), et
l'élément d'actionnement de transmission (110) comprend une pédale de changement.

2. Véhicule à enfourcher (1) comprenant un dispositif de commande de changement de vitesse (50) selon la revendication 1, comprenant :
un capteur de position d'élément d'actionnement d'embrayage (21) pour détecter une position de l'élément d'actionnement d'embrayage (5b), dans lequel le dispositif de commande (95) commande le dispositif d'entraînement (60) selon une position de l'élément d'actionnement d'embrayage (5b) détectée au moyen du capteur de position d'élément d'actionnement d'embrayage (21).

3. Véhicule à enfourcher (1) comprenant un dispositif de commande de changement de vitesse (50) selon la revendication 1 ou 2, adapté pour changer librement une caractéristique d'embrayage, la caractéristique d'embrayage étant une caractéristique de l'embrayage (44) pour un actionnement de l'élément d'actionnement d'embrayage (5b).

4. Véhicule à enfourcher (1) comprenant un dispositif de commande de changement de vitesse (50) selon la revendication 1, 2 ou 3, comprenant :
un dispositif de détection d'état de conduite pour détecter un état de conduite d'un véhicule (1) associé.

5. Véhicule à enfourcher (1) comprenant un dispositif de commande de changement de vitesse (50) selon la revendication 3 et 4, dans lequel le dispositif de commande (95) change la caractéristique d'embrayage sur la base d'un résultat de la détection au moyen du dispositif de détection d'état de conduite.

6. Véhicule à enfourcher (1) comprenant un dispositif de commande de changement de vitesse (50) selon l'une quelconque des revendications précédentes, comprenant un dispositif de stockage (90) pour stocker une pluralité de multiples caractéristiques d'embrayage prédéterminées.

7. Véhicule à enfourcher (1) comprenant un dispositif de commande de changement de vitesse (50) selon la revendication 6, comprenant un dispositif d'entrée (25) pour une entrée en sélectionnant au moins l'une de la pluralité de caractéristiques d'embrayage.

8. Véhicule à enfourcher (1) comprenant un dispositif de commande de changement de vitesse (50) selon la revendication 7, dans lequel le dispositif de commande (95) commande le dispositif d'entraînement (60) de manière que la caractéristique d'embrayage sélectionnée au moyen du dispositif d'entrée (25) est obtenue.

9. Véhicule à enfourcher (1) comprenant un dispositif de commande de changement de vitesse (50) selon la revendication 6 lorsqu'elle dépend de la revendication 4 ou 5, dans lequel
le dispositif de commande (95) sélectionne au moins l'une parmi la pluralité de caractéristiques d'embrayage sur la base d'un résultat de la détection par le dispositif de détection d'état de conduite pour commander le dispositif d'entraînement (60) de sorte que la caractéristique d'embrayage sélectionnée est obtenue.

10. Véhicule à enfourcher (1) comprenant un dispositif de commande de changement de vitesse (50) selon la revendication 1, dans lequel le dispositif de commande de changement de vitesse (50) est prévu dans un véhicule à enfourcher (1), et dans lequel la transmission (43) peut changer librement les vitesses dans de multiples rapports.
